Europäisches Patentamt

European Patent Office

Office européen des brevets

(19)

(11) **EP 1 307 066 B1**

(12) **EUROPEAN PATENT SPECIFICATION**

(45) Date of publication and mention
of the grant of the patent:
**07.06.2006 Bulletin 2006/23**

(51) Int Cl.:
***H04Q 7/36*** (2006.01)

(21) Application number: **02016413.3**

(22) Date of filing: **22.07.2002**

(54) **Minimisation of interference in cellular communications systems**

Interferenzminimierung in zellularen Kommunikationssystemen

Minimisation d'interférence dans des systèmes de communication cellulaires

(84) Designated Contracting States:
**AT BE BG CH CY CZ DE DK EE ES FI FR GB GR
IE IT LI LU MC NL PT SE SK TR**

(30) Priority: **18.08.2001 GB 0120191**

(43) Date of publication of application:
**02.05.2003 Bulletin 2003/18**

(73) Proprietor: **MOTOROLA, INC.**
**Schaumburg, IL 60196 (US)**

(72) Inventors:
• **Sancho, Fernando**
 **3 C Madrid 28007 (ES)**
• **De Juan, Paul**
 **5 B Madrid 28005 (ES)**
• **Escamilla, Javier**
 **1 A Madrid 28007 (ES)**

(74) Representative: **Jepsen, René Pihl et al**
**Eltima Consulting**
**Grove House, Lutyens Close'**
**Chineham Court**
**Basingstoke, Hants RG24 8AG (GB)**

(56) References cited:
**WO-A-98/53621       US-A- 5 969 689**
**US-A- 6 104 936**

• **WU JIANHUI ET AL: "Antenna downtilt
performance in urban environments" MILITARY
COMMUNICATIONS CONFERENCE, 1996.
MILCOM '96, CONFERENCE PROCEEDINGS,
IEEE MCLEAN, VA, USA 21-24 OCT. 1996, NEW
YORK, NY, USA,IEEE, US, 21 October 1996
(1996-10-21), pages 739-744, XP010204078 ISBN:
0-7803-3682-8**

EP 1 307 066 B1

**Description**

This invention relates to methods for minimising interference in cellular communications systems and has applicability to systems such as GSM (Global System for Mobile Communications) and the so-called 3-G (third generation) system currently under standardisation.

Cellular communication systems generally include mobile services switching centres (MSC) coupled to a public switched telephone network (PSTN), base stations (BS) and radio telephone subscriber units often referred to as mobile stations or "mobiles".

Each of a plurality of base stations generally defines a geographic region or cell proximate to the base station to produce coverage areas. The coverage area of any given cell may partially overlap with that of one or more of its neighbours. Cell sizes range typically from 200 metres in diameter in urban areas to 60 kilometres in rural areas. Each base station comprises the radio frequency components and the antenna for communicating with the mobile stations. The antennas used may be omni-directional or directional. Each antenna will have a particular coverage area associated with it which may be adjusted by the network operator by adjusting the antenna's orientation or by using beam-forming techniques.

The communication link from a base station to a mobile station is called the downlink. Conversely, the communication link from the mobile station to the base station is referred to as the uplink. Usually, several base stations are under the control of a base station controller (BSC) which in turn communicates directly by land-line or microwave link with an MSC. Several base station controllers may report to one MSC.

Multiple access techniques permit the simultaneous transmissions from several mobile stations to a single base station. The GSM system uses time division multiple access (TDMA), in which a communications channel consists of a time-slot in a periodic train of time intervals over the same frequency. Each mobile station is allocated one specific time slot for communication with a base station in a repeating time frame. Another type of multiple access technique and one proposed for the 3G system, is known as code division multiple access (CDMA) which employs spread-spectrum signalling. Individual users in the CDMA communications network use the same radio frequency (RF) carrier but are separated by the use of individual spreading codes. Hence, multiple communications channels are allocated using a plurality of spreading codes within a portion of radio spectrum, each code being uniquely assigned to a mobile station. Further schemes involve combinations of both TDMA and CDMA.

By means of the aforementioned components, the cellular system is able to (amongst other things) monitor the number of calls made by a mobile station, control the handover of the communications link from the mobile station to the base stations as it moves from one cell to another, calculate the round-trip time (often referred to as the timing advance) of the communications link between the mobile station and the base station and track the mobile station's location within the network by means of a location update sequence.

Standard GSM has a total of 124 frequencies available for use in a network. Most network providers are unlikely to be able to use all of these frequencies and are generally allocated a small subset of the 124. Typically, a network provider may be allocated 48 frequencies for providing coverage over a large area such as Great Britain, for example. As the maximum cell size is approximately 60 kilometres in diameter, 48 frequencies would not be able to cover the whole of Great Britain. To overcome this limitation, the network provider must re-use the same frequencies over an over again in what is termed a frequency re-use pattern. (Frequency re-use means the use of the same carrier frequency in different cells). When planning the frequency re-use pattern, the network planner must take into account how often to use the same frequencies and determine how close together the cells are, otherwise co-channel and/or adjacent channel interference may occur. The network provider will also take into account the nature of the area to be covered. This may range from a densely populated city (high frequency re-use, small cells, high capacity) to a sparsely populated rural expanse (large omni-cells, low re-use, low capacity).

Co-channel interference occurs when RF carriers of the same frequency are transmitting in close proximity to each other and the transmission from one RF carrier interferes with the other RF carrier. Adjacent channel interference occurs when an RF source of a nearby frequency interferes with the RF carrier. Interference levels within a given cell may be monitored and in a typical cellular communications system, each mobile station performs real time measurements and reports them back to its serving base station. For example, in the GSM system, each mobile station measures the downlink signal quality i.e. the bit error rate, and the downlink signal strength of a signal received from its serving base station in whose cell it currently resides, and also the downlink signal strength from neighbouring base stations serving neighbouring cells. All these measurements are periodically reported back to the serving base station. For any given cell, it is possible to measure (at each mobile station) the interference levels caused by the environment during a call. These levels are usually expressed as the ratio of the received signal level from the wanted source (carrier level, C) to the interference received level (interference level I), or C/I and are expressed in dB. The distribution of C/I ratios of a given cell depends on the locations of the mobile stations in communication with the base station serving the cell and on the locations of the interfering sources. Hence, it depends on cellular planning and on frequency re-use. In order to ensure and acceptable quality of service to subscribers, some objective must be put on the minimum C/I ratio. For instance, a criterion can be that at least 90% of the communications have a quality above some given threshold for C/I. For example, a threshold value of 7dB corresponds to a transmission quality close to the maximum with GSM full-rate speech.

In the GSM system, one carrier frequency is allocated for communications on the downlink and another carrier frequency is allocated for communications on the uplink.

In order to gain further increases in capacity with the geographic area, it is known to employ a technique called sectorisation. Sectorisation splits a single cell into a number of sectors with each sector having an associated antenna and behaving as an independent cell. Each sector usually uses special directional antennas to ensure that the radio propagation from one sector is concentrated in a particular direction. This has a number of advantages. Firstly, concentrating all the energy into a smaller area, for example, 60°, 120° and 180° instead of 360°, results in a much stronger signal. Secondly, one can now use the same carrier frequencies in a much closer frequency re-use pattern, thus allowing the communications network to support more mobiles. Frequency re-use allows the use of the same carrier frequency in different cells or cell sectors. The distribution of RF carriers and the size of the sectored cells is selected to achieve a balance between avoiding co-channel interference by geographically separating the cells using the same RF frequencies and achieving a communications channel density sufficient to satisfy the anticipated demand.

Hence, there is a tradeoff between co-channel interference and network capacity. Means for reducing co-channel interference in a frequency re-use configuration are advantageous because an enhancement of overall network capacity will result.

One known means for reducing co-channel interference involves frequency hopping. Frequency hopping allows the network operator to use a set of frequencies during a call instead of only one, eg. a communication changes its frequency at regular intervals in accordance with a pre-established sequence of hops through a list of available frequencies. However, the number of potentially interfering cells in the system is increased. Another known means for reducing co-channel interference involves creating a micro-cell in those regions most likely to suffer from interference. Micro-cells may be created under an existing network thus forming a layered architecture where cells of the original existing network become umbrella cells overlapping the coverage areas of several microcells.

Another way to minimise interference is to tailor the coverage area of cells. For instance, antenna down-tilt adjustment is a common practice widely used in the deployment of cellular systems in order to minimise the spread of radiation and so reduce interference.

Optimisation of antenna down-tilt according to known techniques relies on a manual and subjective estimation assisted by long-term knowledge of system optimisation. These known techniques have the disadvantage of requiring experienced RF engineers to carry them out. Furthermore, the process is time consuming.

United States of America Patent US 5,969,689 discloses an omni directional coverage multibeam antenna which may be electrically or mechanically steered to affect elevation or azimuthal beam control.

Patent Cooperation Treaty patent application WO98/53621 discloses a system for optimizing system parameters in a cellular communication system. Statistics of pilot strength measurements may be compiled and the antenna tilt of base stations may be adjusted in accordance with the compiled statistics.

However, neither of the disclosed systems provides for optimal performance.

Thus, there is a need for automated method for optimizing coverage areas of base station antennas in order to meet a desired interference criterion. Particularly in cases where frequency hopping is employed and carrier frequencies are more closely re-used, it is preferable for cell coverage to be restricted to the useful zone where the base station associated with the cell is the "server". Radiation detectable by a mobile station in regions where the base station is not required to serve represents unwanted interference. Base stations which are positioned on hill tops and so act as umbrella cells can create large areas of overlap with neighbouring cells if the antenna orientation is not optimised.

According a first aspect of the present invention, there is provided a method according to claim 1.

According a second aspect of the present invention, there is provided an apparatus according to claim 9.

Adjustment of the beam pattern may comprise adjusting the down-tilt of the server base station's antenna.

In one embodiment, a down-tilt value for several qualified neighbours is determined and an average down-tilt value is computed by combining weighted down-tilt values of each of the qualified neighbours.

The step of determining the C/I indicator value may comprise the step of averaging a plurality of measurement reports received from mobile stations located within the coverage area of a qualified neighbour base station. It may also further comprise the step of modifying the C/I indicator value by an amount dependant upon the variation in the measurement reports.

The method may further include the step of identifying a server base station whose height relative to an average height of neighbour base station's is greater than a pre-set threshold.

The step of identifying a qualified neighbour base station may further comprise one or more of the following steps;

(I) identifying a neighbour base station which is oriented face to face with the server base station such that their respective antenna beam patterns radiate towards each other,

(II) identifying a neighbour base station which is oriented back to front with respect to the server base station such that their respective antenna beam patterns radiate in the same direction,

(III) comparing the number of measurement reports relating to the server base station and received from mobile stations located within the coverage area of a particular neighbour base station with the number of measurement reports received which relate to the most frequently reported base station wherein all said measurement reports are received at the particular neighbour base station.

Some embodiments of the invention will now be described, by way of example only, with reference to the drawings of which;

Figure 1 is a flow chart showing the steps involved in performing the method in accordance with the invention,

Figure 2 is a schematic diagram illustrating the influence of a server cell on a neighbour cell,

and Figure 3 is a schematic diagram illustrating adjustment of antenna down-tilt in accordance with the present invention.

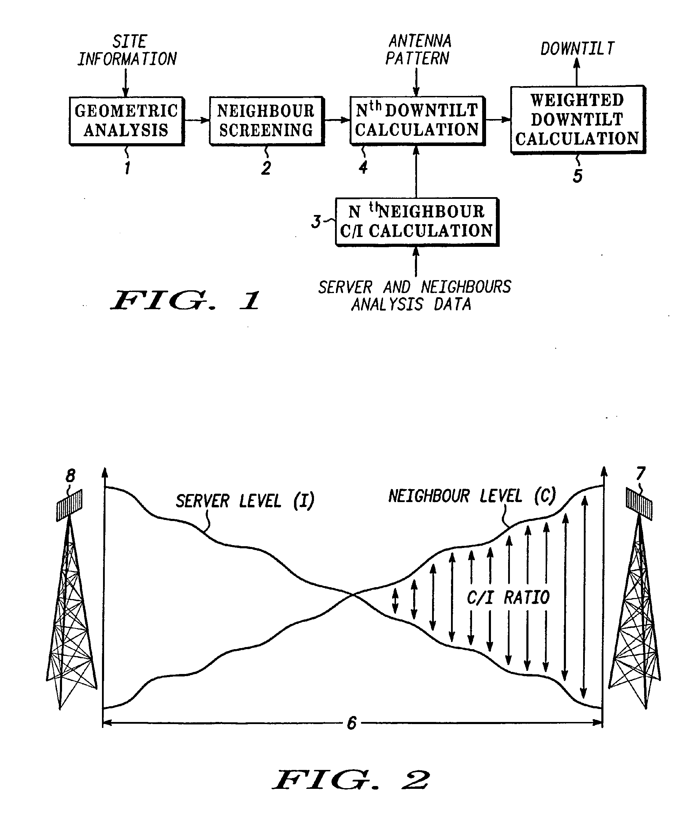

Figure 1 illustrates the basic steps involved in determining a value of desired downtilt for a server base station thereby adjusting its antenna beam's area of coverage in order to minimise interference in neighbouring cells.

At step 1, a geometric analysis characterisies the topology of a cellular communications network by calculating all the distances and orientations between a server base station and its neighbours. In the neighbour screening step 2, the particular neighbours that are affected by the interference coming from the server cell are selected. In step 3 an Nth neighbour C/I calculation evaluates the grade of interference that the server base station introduces to its neighbours (C/I) ratio. In step 4, an Nth down-tilt calculation calculates for any affected neighbour, the down-tilt correction that is required at the server base station to reduce its affect to tolerable levels. In step 5, a weighted down-tilt calculation evaluates the importance of the different neighbours affected and makes a weighted decision of the final down-tilt correction.

In order to use geometric algorithms it is necessary to have all the details which accurately define the network topology. For this purpose, the geographical information of the base station sites (elevation, location, identification) and technical details of the antennae (model, beam width, height, orientation, tilt) need to be available.

Data collected from the live network is aggregated and analysed in order to get a signal strength distribution for every server-neighbour relationship in order to calculate the C/I to characterise the server to neighbour path profile. For the down-tilt calculation on a particular cell, the bi-directional analyses of all the server-neighbour relationships are required.

The known CTP (Call Trace Product) tool has the ability to produce the required files when the source reports are collected with the call trace functionality of a base station controller. The typical file format generated by this tool gives the distribution of the server reports, and the difference in dB with the neighbour in any report. These files are used to calculate the C/I ratios for the different server-neighbour relationships.

It is necessary as well to account for the absolute number of reports available for every server-neighbour pair in order to determine the weight of all the relevant neighbours. The output generated by CTP tool also contains this information.

Considering that the final objective of the process is to provide an angle value to down-tilt the server base station's antenna, its properties need to be known. The identity of the antenna is accurately specified knowing its radiation pattern, so the method makes use of it to calculate the effect on the interference (C/I patterns) caused by any down-tilt angle, and vice-versa.

Horizontal and vertical radiation patterns are required in a digital tabular format to decide the down-tilt value according to the needed overlap reduction and the type of antenna. In this example, files with the values of attenuation with respect to the maximum, available at angular positions with 1 degree of resolution are determined.

Referring again to Figure 1 the geometric analysis (step 1) is performed.

The objective of this part of the process is to calculate some indicators related to the topology of the network to make possible the study of the problem from a geometric point of view. A set of parameters is calculated for a server base station considering the neighbours reported in the data collected.

The first step in this geometric analysis is to calculate the range and bearing of each neighbour base station with respect to the server base station.

The location of the base station sites is commonly provided by the Longitude and Latitude co-ordinates and from such co-ordinates the required geometric parameters can be calculated.

The influence of a particular neighbour in the determination of the down-tilt required for the particular serving base station depends on both the relative orientation of the server and neighbour sites, and the orientation of the antennae at the sites. Neighbours orientated face to face with the server will be more important than the ones located back to front, front to back or back to back.

In order to classify the neighbours according to their importance to determine the down-tilt, it is necessary to define, on a per cell basis, what is called "Area of Influence".

An area of influence is defined in the following way:

For a serving base station it is the set of angular directions through which the base station introduces interference to other base stations' area of coverage (or "cells"). For a neighbour base station, it is the set of angular directions through which its associated cell receives interference coming from the server base station.

The size of these areas will depend on the number of cells associated with a site and the type of antenna installed. For example, Omni-directional sites will have as area of influence the interval [0°,360°].

Considering the common case of 3-cell (sectored) sites, the definition of the areas of influence are done by calculating the bisectrix of the angles between the antennae orientations.

For a regular sector orientation in the site (0°, 120°, 240°) and identical antenna types, areas of influence are: [300°,60°], [60°,180°], and [180°,300°].

From the geometric analysis, those neighbours whose area of coverage which at least partially overlap with that of the server can be identified.

Next, a test is made in order to decide whether or not the server base station creates an "umbrella" cell.

Umbrella cells are a very special case of overlap between cells in the system because of the high overlapping area affected and the high number of neighbours involved and affected by the potential interference caused by them.

Another important point is that in the approach to reduce the overlap, the down-tilt adjustment is the method used to tailor the coverage area of the cells. Umbrella cells produce an overlap pattern that cannot always be modified in the desired way by down-tilting the antennae. In short, there are cases where a down-tilt increase does not improve the situation. For these cases, a reduction of the antenna height, a change of antenna model or even dismantling the base station will be the proper approach.

Keeping in mind these two aspects, the identification of this type of cell is a useful task, and it is worth defining some rules and criteria to classify a particular cell as an "umbrella". These base stations so-identified are marked as "umbrella" and are dealt with in a specific way described below.

The test to classify a cell as an umbrella cell is based on geometrical rules which determine a base station whose antenna is located at a certain height above the surrounding environment. Such dominant cells are candidates to be catalogued as umbrella cells, and some of the criteria to reduce the overlap is modified to address these situations.

The first step in this process is to define the size of the neighbourhood surrounding the cell under consideration. The data from the environment are discrete samples corresponding to the positions where the reported neighbours are located, so it is necessary to exclude in this calculation the ones located far away from the site under consideration. A reported neighbour in this analysis means a neighbour base station whose signal is received and reported by a mobile station located in the cell of and served by the server base station under consideration.

The average and standard deviation of the distances from the server to the reported neighbours are calculated, and only the neighbours whose distance is smaller than the average plus the standard deviation are defined as belonging to the cell neighbourhood (long distance neighbours are excluded).

Once that the distant neighbours have been filtered out, the next step is to calculate an average difference in vertical separation between the server base station and its remaining neighbours.

The final decision to mark a particular cell as an umbrella cell is based on the value of the vertical separation parameter. The criterion considered is to compare it with a margin fixed to 10 metres this being a reasonable value in practice. This margin value is more critical for flat terrain since the standard deviation of the neighbour elevations is a smaller value.

Considering now the neighbour screening process of step 2; the intended collection of representative data from the live network involves a process of test neighbour definition, in order to get interference information in the whole frequency band. This process leads to huge lists of reported neighbours for every serving cell that make difficult the identification of the down-tilt value required. A method to reduce the amount of neighbour reports and identify the ones that must be considered in the calculation of the down-tilt value is necessary.

There are two steps in the screening process, a geometric criterion and a traffic disruption criterion.

The geometric criterion is based on the orientation angles in both directions (server to neighbour and vice versa) and the areas of influence calculated for the server and neighbours. The intention is to identify the neighbours that have the highest overlap with the server.

The worst overlapping case occurs for those neighbours that are orientated face to face with the server. Such neighbour cells are identified and some are considered in the determination of the down-tilt. Any reduction in overlap with those neighbours will reduce as well the overlap with the remaining non-faced neighbours.

The procedure to screen these neighbours and either include or exclude a particular one from the down-tilt calculation is governed by the following two rules:

A neighbour seen from the server at an angle that is out of the server influence area will be excluded from the down-tilt calculation (neighbour not qualified). This means that the server will not be introducing interference to this particular neighbour's cell. For all the neighbours: If the server is seen from a neighbour at an angle that is out of the neighbour influence area, that neighbour will be excluded from the down-tilt calculation (neighbour not qualified). This means that this particular neighbour will not be receiving interference from the server under analysis.

The results of the application of this procedure are that several neighbours can be excluded from the down-tilt calculation process. Thus, measurement report analysis is only required in the remaining qualified neighbours.

As mentioned previously, it is necessary to identify the umbrella cells because the characteristics of the overlap that they produce are different. These differences impact as well in the procedure used to screen the neighbours.

In this case, the neighbours affected (interference) by the signal radiated by the umbrella cell are not only the ones located front to front, but also the ones placed back to front. It is possible that the interference effect caused by the umbrella is only noticed at the neighbours located back to front, so it is necessary to consider these neighbours in the analysis. Considering the screening rules described above, these particular neighbours are excluded, because they are not face to face, so a modification in the exclusion procedure for the umbrella cells is required to include all meaningful neighbours.

In order to cope with this particular situation, the screening procedure applied to cells identified as "umbrella" will be more relaxed: Only the neighbours seen from the server at an angle that is out of the server influence area will be excluded from the down-tilt calculation (neighbours not qualified). This means that the server will be considered introducing interference to all the neighbours located inside its influence area.

Considering now the traffic disruption criterion.

The neighbours passing the geometric constraints (qualified ones) are filtered again according to this traffic criterion.

So far, all the qualified neighbours are considered in the same way, but not all of them have the same importance to determine the down-tilt value. Moreover, there will be some neighbours that may be discarded in the calculation due to their low importance. In order to exclude these irrelevant neighbours, it is necessary to take into account the following two aspects:

The neighbours that carry more traffic should have more weight in the down-tilt calculation since more mobiles can potentially be affected by the interference introduced by the serving cell (more traffic is disrupted).

The neighbours that frequently receive measurement reports relating to the server under analysis should also give more influence to the down-tilt calculation, because more mobiles are placed in the overlap area between both cells (ie. more percentage of traffic in the neighbour cell is disrupted).

The process to determine the neighbours that are irrelevant in the down-tilt calculation is based on the analysis of the measurement reports of the serving cell as neighbour of all the neighbours that passed the geometric criterion.

The analysis of the server-neighbour and neighbour-server files then provides the information that is necessary to determine the irrelevant neighbours.

In order to determine influence of the neighbours, the importance of the server to each previously qualified neighbour is analysed. An indicator is obtained for every neighbour with the ratio between the measurement reports relating to the server and the measurement reports relating to the base station most frequently reported being determined.

A neighbour considered by this criterion is discarded at this point if this indicator (presence of the server) is below a threshold. A reasonable value for this threshold is 0.1 (i.e. the server is reported at least the 10% of the times that the most frequently reported base station appears in the measurement reports). So any neighbour that does not satisfy this criterion will not be considered in the down-tilt calculation.

The neighbour C/I calculation is next performed (step 3).

Once that the neighbours to be further considered have been identified, the calculations described here under need to be done in parallel for each of the remaining qualified neighbours.

From this follows the down-tilt calculation process for each one of the Server-Neighbour paths, there being as many paths as qualified neighbours exist.

The main geometrical parameters to consider are the relative heights of the server and neighbour antennae, the distance between them and the down-tilt and radiation pattern of the server antenna.

The objective of the analysis is to reduce the overlap between two cells in order to reduce the interference that they are causing each other. The first step is to find an indicator to characterise the degree of influence between two particular cells, in a way that improvements on the indicator represent reduction of the interference.

In this embodiment, the server base station's antenna down-tilt is determined by the required improvement in the indicator and is achieved through the calculation of the required additional attenuation of the antenna beam. This attenuation is directly determined by the gain that the antenna of the serving cell provides so a modification of the antenna gain is the last requirement. The required antenna gain provides the down-tilt value since they are directly related through the antenna radiation pattern.

The indicator to characterise a particular server-neighbour path is the Carrier to Interference (C/I) ratio, considering that C is the average level of the neighbour base station's signal and I is the average level of the server base station's signal. The criterion to calculate the required attenuation value (and hence the down-tilt) is to satisfy a minimum threshold of C/I ratio in the neighbour base station's coverage area. With this rule, it will be possible to control the radiation of the server cell that spreads along the coverage areas of the neighbours.

With reference to Figure 2, in an approximate way, the C/I ratio will vary along the Server-Neighbour path 6, being a maximum close to the site of the neighbour base station 7 (but acting as server with a level of C dBm), and decreasing close to the server base station 8.

Whereas in a relaxed frequency reuse pattern, high overlap between server and neighbour coverage areas would not cause any disturbance, for very tight reuse patterns such as 1x1 this is very critical. With this 1x1 reuse pattern, all the cells share the same frequencies, so they interfere between themselves, and the disturbance caused depends directly on the size of the overlapping area.

If the level of the interfering cell (I) is not under the desired cell level (C) by at least 9 dB assumed as the protection required the interference will cause quality degradation. Although, as shown in Figure 2, this C/I ratio decreases when approaching the border of the cells, at least as a first approach this margin should be satisfied in the area where most of the mobiles are located, in order to minimise the interference in the system.

Nowadays, with frequency hopping being widely deployed (and 1 x 1 re-use becoming popular quickly), this approach is strongly recommended. For practical purposes, the criterion proposed herein is to guarantee an average C/I ratio of at least 9 dB in the area where 90% of mobiles that report the highest server levels in the neighbour cell are loated. Considering this, the average of the 90% of reports with highest (C) values are used as the reference against the 9 dB threshold.

The use of an average C/I value of 9 dB will not ensure that all the measurement reports (and mobiles) always have this difference between server and neighbour signal levels. Considering that this average is calculated with the measurement reports close to the neighbour base station's location 7, (the ones with best C/I), the percentage of measurement reports that have a C/I better than 9 dB depends on the shape of the C/I profile (i.e. on the deviation of the values around the average). Typically, when working with average values, a safety margin over the threshold must be considered, depending on the variability of the values in the distribution. This safety margin can be obtained from the analysis of the C/I profile as a function of the percentage of reports used in the calculation.

The estimation of the current value of this C/I indicator is done through the analysis of the Server-Neighbour files (obtained from the call trace product or a similar measurement report analysis program). The reports with 90% highest values of the neighbour (when acting as server) will be considered and averaged to calculate a signal level (C) that will represent the average level of the neighbour when being server in the area of the neighbour where the 90% of the mobiles are located. From the same reports, the level of the server (acting now as neighbour of the neighbour) is averaged in order to estimate a value (I) that represents the average level of the interfering cell in the same area. The desired averaged C/I value is available now as the ratio between these two values.

The most critical point in this calculation is to decide the number of measurement reports, to be considered in the calculation of the C/I value. There are two opposite aspects to be considered:

The number of measurement reports, needs to be big enough to give reliable and meaningful averaged values of C/I. For that purpose, at least 90% of the measurement reports received during the report collection period need to be considered in the calculation of the average C/I.

The method used to determine the down-tilt is based on the assumption that a certain C/I value needs to be guaranteed at the location of the neighbour base station site. Because of this, it is necessary to have a value of C/I that can be associated with this site position, and hence the values used to estimate it should correspond to mobiles located as close to the site as possible. The bigger the number of reports used to calculate the average C/I, the less accurate the assumption. It is proposed to take for this purpose the measurement reports that contain the highest 10% of the values (for C) for the serving cell level (belonging to the neighbour cell in this analysis). This value is a compromise between having meaningful data and not making the surrounding area too big. It is assumed that the highest levels reported correspond to mobiles located near the site.

As a summary of the two aspects, the proposal is: from measurement reports received during the collection time interval;

Calculate an average C/I value using the 90% of the measurement reports with highest reported levels from the neighbour cell acting as a server. This value is compared with the 9 dB threshold to determine whether the down-tilt is necessary for this neighbour or not. The difference will be an extra attenuation to be achieved by down-tilting the antenna.

Determine the C/I profile for the server (neighbour)-neighbour (server) relationship, as a function of the percentage of measurement reports used in the calculation. The variability of the profile is characterised by the difference in dB between the average C/I calculated with the 10% of the reports and the average C/I calculated with the 90% of them. Using the same assumption as before, this is an approach of the C/I as a function of the distance to the neighbour location. The profile is thus characterised by the difference in dB between the values calculated for the 10% and 90% of the reports. The down-tilt of the antenna is estimated to introduce an additional attenuation to the interfering signal at the position of the neighbour base station site.

Once the C/I ratios with the 10% and 90% of the reports have been calculated, the variability of the profile, measured as the difference of these two values of C/I, is determined for each qualified neighbour.

Typically, a C/I profile variability can have a value of up to 3dB. This difference is considered in the down-tilt calculation in order to get more accurate results.

It is important to remark that there are two different types of qualified neighbours. A neighbour may qualify because it is located face to face with the server (standard qualification) or because it is orientated back to front and the server has been identified as an umbrella cell (umbrella qualification). The way to calculate the additional required attenuation is different in each case.

In the case where the cell associated with the server base station is determined not to be an umbrella cell, the additional attenuation is the addition of two contributions.

The first contribution is the difference between the C/I threshold (9 dB) and the average C/I value calculated for a Server-Neighbour relationship with the 90% of the reports. The second contribution is a term that accounts for the variation in the C/I profile. As noted previously, this second term needs, preferably, to be obtained at the location of the neighbour base station. The formula proposed to calculate the C/I penalty due to the profile variability is presented below.

$$\left(\frac{C}{I}\right)_{Penalty} = Min\left[\left(9 - \left(C/I\right)_{90\%}\right)*\frac{\left(\left(C/I\right)_{10\%} - \left(C/I\right)_{90\%}\right)}{\left(C/I\right)_{90\%}}, \left(\left(C/I\right)_{10\%} - \left(C/I\right)_{90\%}\right)\right]$$

When a cell is identified as an umbrella cell, some of the qualified neighbours may be orientated back to front, and in this case, the extra attenuation required in order to give the desired improvement in C/I, is calculated in a different way. In this case, only one contribution is considered and it is the difference between the C/I threshold (9 dB) and the average C/I value calculated for this Server-Neighbour relationship with the 90% of the reports.

The variation of the C/I profile is not included in this case, because as the down-tilt is calculated with the reference point at the neighbour base station site, all the mobiles perceive the required overlap reduction irrespective of their position within the neighbour's cell. There is no need to include any margin to consider the variability of the C/I.

Thus, the analysis of step 3 results in a value (C/I imp.), the improvement in C/I required for any Server-Neighbour pair in order to ensure that the serving cell does not interfere (within certain limits) with the neighbour considered even if co-channel frequencies are used. This C/I improvement equates to an additional attenuation of the server base station's signal.

The next step is to perform the down-tilt calculation (step 4 in Figure 1) for each neighbour.

These calculations are done in parallel for each of the qualified neighbours, and a different down-tilt value is obtained for every server-neighbour path.

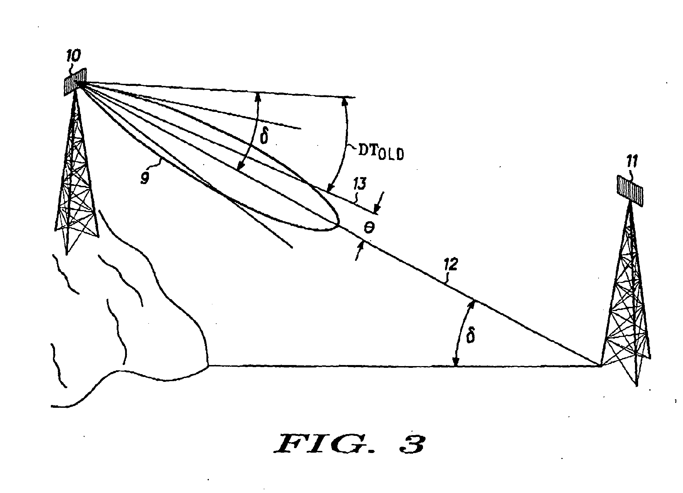

Figure 3 shows the main lobe 9 of a server base station's antenna 10 directed towards a neighbour base station 11.

The neighbour base station 11 is seen from the server antenna 10 at an angle δ. With a current down-tilt angle of $DT_{OLD}$, the ray 12 that hits the neighbour location has an associated attenuation $L_{ANT\ OLD}$ due to the radiation pattern of antenna beam 9.
The upper part of the main lobe is considered in the attenuation calculations, in order to keep the whole main lobe radiating into a useful coverage area.

The objective is to find out the upper ray (or angle with respect to the central maximum gain ray) that suffers the attenuation required to achieve the desired C/I improvement at the neighbour location 11, and based on this angle and the geometry of the system, to determine a new the down-tilt angle for the antenna 10.

δ can be calculated knowing the relative positions of the antenna 10 and neighbour base station 11.

A new down-tilt angle DT new is calculated as follows. Knowing the angle δ and the original setting of the down-tilt, the angle, θ, of the ray 12 directed at the foot of the neighbour base station 11 is determined, (ie Θ = δ- DT old, where Θ is the offset angle from the central ray 13 of the antenna beam that is designated as having zero attenuation in accordance with the previously determined radiation pattern files).

Next, the radiation pattern files are consulted in order to get a numerical value for LANT OLD (ie the attenuation associated with angle Θ).

This attenuation value has to be increased by the desired C/I improvement value which has been computed at step 3 (Figure 1).

Therefore, the new, desired attenuation value is LANT OLD + C/I imp. The radiation pattern files are consulted once more in order to identify a ray and its associated angle ($\alpha$, say) having this new value of attenuation.

The new down-tilt angle DT new can now be defined as DT new = $\alpha + \delta$.

A down-tilt requirement is obtained for every Server-Neighbour path for all qualified neighbours, and a unique value is decided on for the antenna considering a different weight that the different neighbours have in the final down-tilt decision. Thus the final process (step 5 in Figure 1) of performing a weighted down-tilt calculation now follows.

Taking all the individual down-tilt values obtained from the separate analysis of the server-neighbour paths, the last step of the process is the calculation of a unique value that will be the down-tilt applied to the antenna of the server base station.

As described above, not all the qualified neighbours are influenced by the server base station to the same degree. Each is given a certain weight that is determined by the following two aspects:

The neighbours that carry more traffic are given more weight since more mobiles can potentially be affected by the interference introduced by the server base station.

The neighbours whose mobiles report the server under analysis more frequently are also given more weight, because more mobiles are placed in the overlap area between both server and neighbour cells.

An analysis of the measurement reports gives a quantative description of these two aspects.

The absolute number of reports received by each neighbour (provided that the collection time is the same for all of them) will be an indicator of the amount of traffic carried by a neighbour. The highest number of such reports, R, for an individual neighbour is identified.

A weight indicator for any given neighbour is calculated as the ratio between the number of reports received by that neighbour, and containing the server, and R.

Considering that indicator, a weight, W, is determined for each neighbour normalised to 1 (ie, the addition of all the weights of all the qualified neighbours equals to 1).

The final unique down-tilt value is the addition of each weighted contribution (W. DT new) from the qualified neighbours.

**Claims**

1. A method of minimizing interference caused by transmissions from an antenna of a server base station (10) and detected by a mobile station located in a coverage area of a neighbour base station (11), the method including the step of;

    calculating a beam pattern (9) of the antenna,
    and **characterized by** further comprising the steps of:

    identifying at least one neighbour base station as a qualified neighbour base station (11) by having a coverage area at least partially overlapping with that of the server base station (10),
    calculating the signal strength of a first ray, comprising the beam pattern (9), initially directed towards a qualified neighbour base station (11), receiving measurement reports from at least one mobile station located within the coverage area of the qualified neighbour base station (11),
    from said measurement reports, determining a C/I indicator value, specific to a qualified neighbour base station (11), where C relates to strength of a carrier signal of the neighbour base station (11) and I relates to strength of a carrier signal of the server base station (10),
    comparing the C/I indicator value with a pre-set threshold to give a desired attenuation level of the server base station's (10) carrier signal,
    from the beam pattern (9), identifying a second ray whose signal strength is less than that of the first ray by the desired attenuation level,
    and adjusting the beam pattern so that the second ray is directed towards the qualified neighbour base station (11).

2. A method according to Claim 1 in which the step of adjusting the beam pattern (9) comprises adjusting a down-tilt angle of the antenna.

3. A method according to Claim 2 in which the down-tilt adjustment has a value computed from the weighted sum of down-tilt angles computed for a plurality of qualified neighbour base stations.

4. A method according to Claim 3 in which the weight attributed to a given qualified neighbour base station (11) is dependant upon the relative number of mobile stations active within the cell associated with the given qualified neighbour.

**5.** A method according to any preceding Claim in which the step of determining the C/I indicator value comprises the step of averaging a plurality of measurement reports received by a qualified neighbour base station (11) from mobile stations located within the coverage area of the qualifed neighbour base station (11).

**6.** A method according to Claim 5 in which the C/I indicator value is modified by an amount dependant upon the variation in the measurement reports.

**7.** A method according to any preceding Claim including the further step of identifying a server base station (10) whose height relative to an average height of neighbour base stations is greater than a pre-set threshold.

**8.** A method according to any preceding Claim in which the step of identifying includes one or more of the following;

(I) identifying a neighbour base station which is oriented face-to-face with respect to the sever base station,
(II) identifying a neighbour base station which is oriented back to front with respect of the server base station (10),
(III) comparing the number of measurement reports relating to the server base station (10) and received from mobile stations located within the coverage area of a particular neighbour base station, with the number of measurement reports received which relate to the most frequently-reported base station, wherein all said measurement reports are received at the particular neighbour base station.

**9.** An apparatus for minimizing interference caused by transmissions from an antenna of a server base station (10) and detected by a mobile station located in a coverage area of a neighbour base station (11), the apparatus comprising :

means for calculating a beam pattern of the antenna,
and **characterized by** further comprising:

means for identifying at least one neighbour base station as a qualified neighbour base station (11) by having a coverage area at least partially overlapping with that of the server base station (10),
means for calculating the signal strength of a first ray, comprising the beam pattern, initially directed towards a qualified neighbour base station
means for receiving measurement reports from at least one mobile station located within the coverage area of the qualified neighbour base station
from said measurement reports, determining a C/I indicator value, specific to a qualified neighbour base station (11), where C relates to strength of a carrier signal of the neighbour base station (11) and I relates to strength of a carrier signal of the server base station (10),
means for comparing the C/I indicator value with a pre-set threshold to give a desired attenuation level of the server base station's (10) carrier signal,
means for, from the beam pattern (9), identifying a second ray whose signal strength is less than that of the first ray by the desired attenuation level,
and means for adjusting the beam pattern (9) so that the second ray is directed towards the qualified neighbour base station (11).

**Patentansprüche**

**1.** Verfahren zum Minimieren von durch Sendungen von einer Antenne einer Server-Basisstation (10) verursachten und von einer Mobilstation, die in einem Abdeckungsgebiet einer Nachbar-Basisstation (11) positioniert ist, detektierten Störungen, wobei das Verfahren den Schritt des Berechnens eines Strahlmusters (9) der Antenne umfasst und **dadurch gekennzeichnet ist, dass** weiter die Schritte umfasst sind:

Identifizieren wenigstens einer Nachbar-Basisstation als eine qualifizierte Nachbar-Basisstation (11) **dadurch**, dass sie ein Abdeckungsgebiet aufweist, der wenigstens teilweise mit demjenigen der Server-Basisstation (10) überlappt,
Berechnen der Signalstärke eines ersten, von dem Strahlmuster (9) umfassten Strahls, der ursprünglich auf eine qualifizierte Nachbar-Basisstation (11) gerichtet ist,
Empfangen von Messungsberichten von wenigstens einer Mobilstation, die innerhalb des Abdeckungsbereichs der qualifizierten Nachbar-Basisstation (11) positioniert ist,
Bestimmen, aus den Messungsberichten, eines C/I-Indikatorwertes, der für eine qualifizierte Nachbar-Basisstation (11) spezifisch ist, wobei C sich auf die Stärke eines Trägersignals der Nachbar-Basisstation (11) bezieht und sich I auf die Stärke eines Trägersignals der Server-Basisstation (10) bezieht,

Vergleichen des C/I-Indikatorwertes mit einem voreingestellten Schwellenwert, um einen erwünschten Abschwächungspegel des Trägersignals der Server-Basisstation (10) zu ergeben,

Identifizieren, aus dem Strahlmuster (9), eines zweiten Strahls, dessen Signalstärke um den erwünschten Abschwächungswert niedriger ist als diejenige des ersten Strahls, und

Einstellen des Strahlmusters so, dass der zweite Strahl auf die qualifizierte Nachbar-Basisstation (11) gerichtet ist.

2. Verfahren gemäß Anspruch 1, wobei der Schritt des Einstellens des Strahlmusters (9) ein Einstellen eines Absenkungswinkels der Antenne umfasst.

3. Verfahren gemäß Anspruch 2, wobei die Absenkungseinstellung einen Wert hat, der aus der gewichteten Summe von für eine Mehrzahl von qualifizierten Nachbar-Basisstationen berechneten Absenkungswinkeln berechnet wird.

4. Verfahren gemäß Anspruch 3, wobei das einer gegebenen qualifizierten Nachbar-Basisstation (11) zugeordnete Gewicht abhängig ist von der relativen Anzahl der Mobilstationen, die innerhalb der dem gegebenen qualifizierten Nachbarn zugeordneten Zelle aktiv sind.

5. Verfahren gemäß einem der vorangehenden Ansprüche, wobei der Schritt des Bestimmens des C/I-Indikatorwertes den Schritt des Mittelns einer Mehrzahl von Messungsberichten umfasst, die von einer qualifizierten Nachbar-Basisstation (11) von Mobilstationen her empfangen wird, die innerhalb des Abdeckungsgebietes der qualifizierten Nachbar-Basisstation (11) positioniert sind.

6. Verfahren gemäß Anspruch 5, wobei der C/I-Indikatorwert um einen Betrag modifiziert wird, der von der Variation in den Messungsberichten abhängig ist.

7. Verfahren gemäß einem der vorangehenden Ansprüche, umfassend den weiteren Schritt des Identifizierens einer Server-Basisstation (10), deren Höhe relativ zu einer mittleren Höhe von Nachbar-Basisstationen größer ist als ein voreingestellter Schwellenwert.

8. Verfahren gemäß einem der vorangehenden Ansprüche, wobei der Schritt des Identifizierens einen oder mehrere der folgenden Merkmale umfasst:

(I) Identifizieren einer Nachbar-Basisstation, die Front zu Front im Hinblick auf die Server-Basisstation ausgerichtet ist,

(II) Identifizieren einer Nachbar-Basisstation, die Rücken zu Front im Hinblick auf die Server-Basisstation (10) ausgerichtet ist,

(III) Vergleichen der Anzahl von Messungsberichten, die sich auf die Server-Basisstation (10) beziehen und von Mobilstation her empfangen werden, die innerhalb des Abdeckungsgebietes einer bestimmten Nachbar-Basisstation positioniert sind, mit der Anzahl empfangener Messungsberichte, die sich auf die am häufigsten berichtete Basisstation beziehen, wobei all diese Messungsberichte bei der bestimmten Nachbar-Basisstation empfangen werden.

9. Vorrichtung zum Minimieren von Störungen, die durch Sendungen von einer Antenne einer Server-Basisstation (10) verursacht und von einer Mobilstation, die in einem Abdeckungsgebiet einer Nachbar-Basisstation (11) detektiert werden, wobei die Vorrichtung umfasst:

Mittel zum Berechnen eines Strahlmusters der Antenne und **dadurch gekennzeichnet, dass** weiter umfasst sind:

Mittel zum Identifizieren wenigstens einer Nachbarbasisstation als eine qualifizierte Nachbar-Basisstation (11) **dadurch**, dass sie ein Abdeckungsgebiet aufweist, das wenigstens teilweise mit demjenigen der Server-Basisstation (10) überlappt,

Mittel zum Berechnen der Signalstärke eines ersten, von dem Strahlmuster umfassten Strahls, der ursprünglich auf eine qualifizierte Nachbar-Basisstation (11) gerichtet ist,

Mittel zum Empfangen von Mitteilungsberichten von wenigstens einer Mobilstation her, die innerhalb des Abdeckungsgebietes der qualifizierten Nachbar-Basisstation (11) positioniert ist,

Bestimmen, aus den Messungsberichten, eines C/I-Indikatorwertes, der für eine qualifizierte Nachbar-Basisstation (11) spezifisch ist, wobei sich C auf die Stärke eines Trägersignals der Nachbar-Basisstation (11) bezieht und sich I auf die Stärke eines Trägersignals der Server-Basisstation (10) bezieht,

Mittel zum Vergleichen des C/I-Indikatorwertes mit einem voreingestellten Schwellenwert, um einen erwünschten Abschwächungspegel des Trägersignals der Server-Basisstation (10) zu ergeben,

Mittel zum Identifizieren, aus dem Strahlmuster (9), eines zweiten Strahls dessen Signalstärke um den erwünschten Abschwächungspegel geringer ist als diejenige des ersten Strahls, und

Mittel zum Einstellen des Strahlmusters (9) so, dass der zweite Strahl auf die qualifizierte Nachbar-Basisstation (11) gerichtet ist.

**Revendications**

1. Procédé de minimisation des interférences provoquées par les transmissions effectuées par une antenne d'une station de base de desserte (10) et détectées par une station mobile située à l'intérieur d'une zone de couverture d'une station de base voisine (11), le procédé comprenant l'étape qui consiste à :

   calculer un diagramme de rayonnement (9) de l'antenne,
   et étant **caractérisé en ce qu'**il comprend, en outre, les étapes consistant à :

   identifier au moins une station de base voisine en tant que station de base voisine qualifiée (11) par le fait qu'elle a une zone de couverture qui chevauche au moins partiellement celle de la station de base de desserte (10),
   calculer l'intensité du signal d'un premier rayon, faisant partie du diagramme de rayonnement (9), initialement dirigé vers une station de base voisine qualifiée (11),
   recevoir des rapports de mesures en provenance d'au moins une station mobile située à l'intérieur de la zone de couverture de la station de base voisine qualifiée (11),
   à partir desdits rapports de mesure, déterminer une valeur indicative C/I, spécifique d'une station de base voisine qualifiée (11), où C est l'intensité d'un signal porteur de la station de base voisine (11) et 1 est l'intensité d'un signal porteur de la station de base de desserte (10),
   comparer la valeur indicative C/I à un seuil prédéfini, pour déterminer un niveau d'atténuation souhaité du signal porteur de la station de base de desserte (10),
   à partir du diagramme de rayonnement (9), identifier un deuxième rayon dont l'intensité du signal est inférieure à celle du premier rayon d'une quantité égale au niveau d'atténuation souhaité, et
   ajuster le diagramme de rayonnement de telle sorte que le deuxième rayon soit dirigé vers la station de base voisine qualifiée (11).

2. Procédé selon la revendication 1, dans lequel l'étape d'ajustement du diagramme de rayonnement (9) comprend l'ajustement d'un angle d'inclinaison de l'antenne.

3. Procédé selon la revendication 2, dans lequel l'ajustement de l'inclinaison a une valeur calculée à partir de la somme pondérée des angles d'inclinaison calculés pour une pluralité de stations de base voisines qualifiées.

4. Procédé selon la revendication 3, dans lequel le poids attribué à une station de base voisine qualifiée (11) donnée dépend du nombre relatif de stations mobiles qui sont actives à l'intérieur de la cellule associée à la voisine qualifiée donnée.

5. Procédé selon l'une quelconque des revendications précédentes, dans lequel l'étape de détermination de la valeur indicative C/I comprend l'étape consistant à calculer la moyenne d'une pluralité de rapports de mesure reçus par une station de base voisine qualifiée (11) en provenance de stations mobiles se trouvant à l'intérieur de la zone de couverture de la station de base voisine qualifiée (11).

6. Procédé selon la revendication 5, dans lequel la valeur indicative C/I est modifiée d'une quantité qui dépend des variations entre les rapports de mesure.

7. Procédé selon l'une quelconque des revendications précédentes, comprenant l'étape supplémentaire qui consiste à identifier une station de base de desserte (10) dont la hauteur par rapport à une hauteur moyenne des stations de base voisines est supérieure à un seul prédéfini.

**8.** Procédé selon l'une quelconque des revendications précédentes, dans lequel l'étape d'identification comprend une ou plusieurs des étapes suivantes, qui consistent à :

(i) identifier une station de base voisine qui est orientée de face par rapport à la station de base de desserte ;
(ii) identifier une station de base voisine qui est orientée de dos par rapport à la station de base de desserte ;
(iii) comparer le nombre de rapports de mesure concernant la station de base de desserte (10), et qui ont été reçus en provenance de stations mobiles se trouvant à l'intérieur de la zone de couverture d'une station de base voisine particulière, au nombre de rapports de mesure reçus qui concernent la station de base la plus fréquemment rapportée, tous lesdits rapports de mesure étant reçus au niveau de la station de base voisine particulière.

**9.** Appareil pour minimiser les interférences provoquées par les transmissions effectuées par une antenne d'une station de base de desserte (10) et détectées par une station mobile située à l'intérieur d'une zone de couverture d'une station de base voisine (11), l'appareil comprenant :

des moyens pour calculer un diagramme de rayonnement (9) de l'antenne,
et étant **caractérisé en ce qu'**il comprend, en outre :

des moyens pour identifier au moins une station de base voisine en tant que station de base voisine qualifiée (11) par le fait qu'elle a une zone de couverture qui chevauche au moins partiellement celle de la station de base de desserte (10),
des moyens pour calculer l'intensité du signal d'un premier rayon, faisant partie du diagramme de rayonnement (9), initialement dirigé vers une station de base voisine qualifiée (11),
des moyens pour recevoir des rapports de mesures en provenance d'au moins une station mobile située à l'intérieur de la zone de couverture de la station de base voisine qualifiée (11),
à partir desdits rapports de mesure, déterminer une valeur indicative C/I, spécifique d'une station de base voisine qualifiée (11), où C est l'intensité d'un signal porteur de la station de base voisine (11) et I est l'intensité d'un signal porteur de la station de base de desserte (10),
des moyens pour comparer la valeur indicative C/I à un seuil prédéfini, pour déterminer un niveau d'atténuation souhaité du signal porteur de la station de base de desserte (10),
des moyens pour, à partir du diagramme de rayonnement (9), identifier un deuxième rayon dont l'intensité du signal est inférieure à celle du premier rayon, d'une quantité égale au niveau d'atténuation souhaité, et des moyens pour ajuster le diagramme de rayonnement de telle sorte que le deuxième rayon soit dirigé vers la station de base voisine qualifiée (11).

SITE
INFORMATION

ANTENNA
PATTERN

DOWNTILT

GEOMETRIC
ANALYSIS

NEIGHBOUR
SCREENING

$N^{th}$ DOWNTILT
CALCULATION

WEIGHTED
DOWNTILT
CALCULATION

*1*

*2*

*4*

*5*

3 — $N^{th}$ NEIGHBOUR
C/I CALCULATION

SERVER AND NEIGHBOURS
ANALYSIS DATA

*FIG. 1*

*8*

*7*

SERVER LEVEL (I)

NEIGHBOUR LEVEL (C)

C/I RATIO

*6*

*FIG. 2*

FIG. 3